# EUROPÄISCHE PATENTANMELDUNG

(11) **EP 0 957 372 A2**
(43) Veröffentlichungstag der Anmeldung: **17.11.1999**
(21) Anmeldenummer: 99107075.6
(22) Anmeldetag: 12.04.1999
(51) Int. Cl.: G01S 7/285

(54) **Verfahren und elektrische Schaltung zur Verarbeitung eines analogen elektrischen Signals**

(30) Priorität: 12.05.1998 DE 19821188
(71) Anmelder: ITT MANUFACTURING ENTERPRISES, INC., Wilmington, Delaware 19801 (US)
(72) Erfinder: Reiche, Martin, 53639 Königswinter (DE)
(74) Vertreter: Dreiss, Fuhlendorf, Steimle & Becker, Patentanwälte

(57) **Zusammenfassung**

Es wird eine elektrische Schaltung (1) zur Verarbeitung eines analogen elektrischen Signals (sig) beschrieben, die mit einem Empfänger zum Empfangen des von einem Objekt (4) reflektierten Signals versehen ist. Die Amplitude des empfangenen Signals ist abhängig von der Entfernung des Objekts von dem Empfänger. Es sind Mittel (8) zur Anpassung des Signals (sig) an ein Normsignal vorgesehen.

## Beschreibung

Die Erfindung betrifft ein Verfahren zur Verarbeitung eines analogen elektrischen Signals, das von einem Objekt reflektiert und von einem Empfänger empfangen wird, wobei die Amplitude des empfangenen Signals abhängig ist von der Entfernung des Objekts von dem Empfänger. Die Erfindung betrifft ebenfalls eine elektrische Schaltung zur Verarbeitung eines analogen elektrischen Signals, mit einem Empfänger zum Empfangen des von einem Objekt reflektierten Signals, wobei die Amplitude des empfangenen Signals abhängig ist von der Entfernung des Objekts von dem Empfänger.

Beispielsweise bei Abstandsmessungen durchläuft das gesendete Signal die Entfernung vom Sender bis zu dem reflektierenden Objekt und wieder zurück zum Empfänger. Auf diesem Weg wird das Signal proportional zum Abstand gedämpft. Damit ist die Amplitude des empfangenen Signals abhängig von der Entfernung des Objekts von dem Sender bzw. Empfänger. Ebenfalls ist das empfangene Signal abhängig von der geometrischen Größe und beispielsweise der Reflektionsfähigkeit des Materials des Objekts. Bei einem kleinen Objekt mit geringer Reflektionsfähigkeit fällt das empfangene Signal kleiner aus als bei einem größeren Objekt mit guter Reflektionsfähigkeit.

Das empfangene Signal muß zur weiteren Verarbeitung digitalisiert werden. Zu diesem Zweck ist es von einem Analog/Digital-Wandler in ein digitales Signal umzuwandeln. Aufgrund der erwähnten gegebenenfalls sehr hohen Dynamik der Amplitude des empfangenen Signals muß der Eingangsbereich des Analog/Digital-Wandlers sehr gut ausgenutzt werden, damit die Analog/Digital-Wandlung ein kleines Quantisierungsrauschen im Verhältnis zur Signalleistung aufweist.

Aufgabe der Erfindung ist es, ein Verfahren und eine elektrische Schaltung zur Verarbeitung eines analogen elektrischen Signals zu schaffen, mit dem bzw. mit der eine verbesserte Ausnutzung der Analog/Digital-Wandlung möglich ist.

Diese Aufgabe wird bei einem Verfahren der eingangs genannten Art erfindungsgemäß dadurch gelöst, daß das Signal an ein Normsignal angepaßt wird. Ebenfalls wird die Aufgabe bei einer elektrischen Schaltung der eingangs genannten Art erfindungsgemäß dadurch gelöst, daß Mittel zur Anpassung des Signals an ein Normsignal vorgesehen sind.

Durch die Anpassung des Signals an ein Normsignal wird die Abhängigkeit des Signals von der geometrischen Größe und der Reflektionsfähigkeit des Objekts sowie von dem Anstellwinkel der Wellenfront und der Lage des Objekts in der Antennencharakteristik kompensiert. Unabhängig von diesen Größen wird das Signal an das Normsignal angepaßt und weist damit nach einer Einschwingzeit eine vorgebbare Größe auf. Der Eingangsbereich des Analog/Digital-Wandlers kann damit besser ausgenutzt werden, so daß der Signal/Stör-Abstand bei im Verhältnis zur Normgröße kleinen Signalen vergrößert und das Quantisierungsrauschen vermindert wird. Bei im Verhältnis zur Normgröße großen Signalen wird ein Übersteuern und damit eine Verminderung der Signalintegrität vermieden.

Bei einer vorteilhaften Ausgestaltung der Erfindung wird das Signal mit einer Funktion verknüpft, mit der die Abhängigkeit von der Entfernung kompensiert wird. Zu diesem Zweck sind Mittel zur Verknüpfung des Signals mit einer Funktion vorgesehen, mit der die Abhängigkeit von der Entfernung kompensierbar ist.

Durch die Kompensation der Abhängigkeit des Signals von der Entfernung kann der Eingangsbereich des Analog/Digital-Wandlers besser ausgenutzt werden. Damit wird das Quantisierungsrauschen bei kleinen Signalen vermindert bzw. das Risiko des Übersteuerns gemindert.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Fig. 1: zeigt ein schematisches Blockschaltbild eines ersten Ausführungsbeispiels einer erfindungsgemäßen Schaltung zur Verarbeitung eines analogen elektrischen Signals,
- Fig. 2a und 2b: zeigen schematische Signalverläufe über der Zeit von
Signalen der Schaltung der Figur 1,
- Fig. 3: zeigt einen weiteren schematischen Signalverlauf über der Zeit eines möglichen Signals der Schaltung der Figur 1,
- Fig. 4: zeigt eine schematische Darstellung einer Kennlinie der Schaltung der Figur 1, und
- Fig. 5: zeigt ein schematisches Blockschaltbild eines zweiten Ausführungsbeispiels einer erfindungsgemäßen Schaltung zur Verarbeitung eines analogen elektrischen Signals.

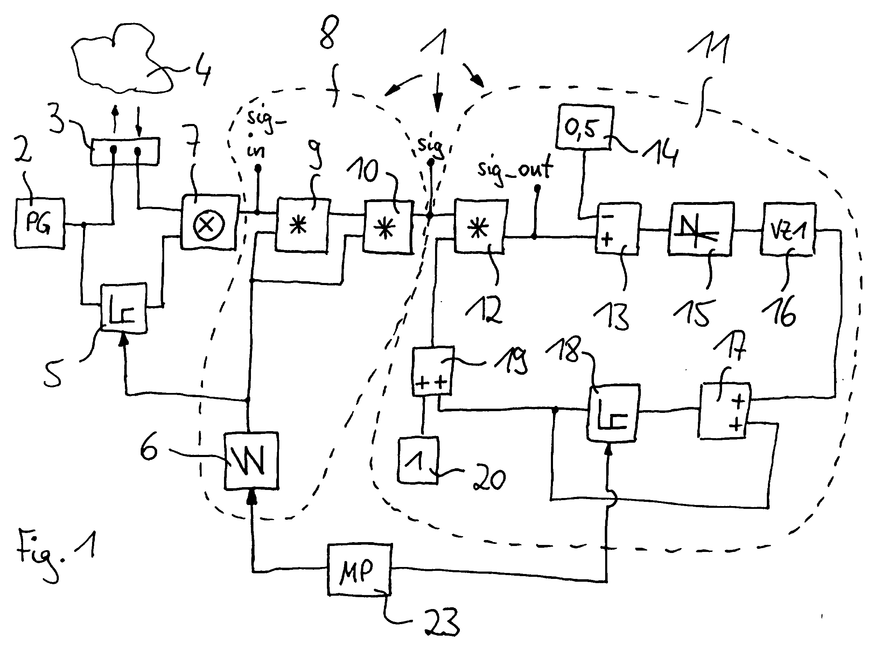

In der Figur 1 ist eine Schaltung 1 dargestellt, die zur Erzeugung und nachfolgenden Verarbeitung eines analogen elektrischen Signals vorgesehen ist. Die Schaltung 1 kann beispielsweise dazu verwendet werden, den Abstand eines Kraftfahrzeugs von einem Objekt zu ermitteln. Es wird aber ausdrücklich darauf verwiesen, daß dieser Beispielfall nicht die einzige Anwendungsmöglichkeit der Schaltung 1 darstellt.

In der Schaltung 1 ist ein Pulsgenerator (PG) 2 vorgesehen, der ein Pulssignal, insbesondere ein hochfrequentes Pulsradar-Signal erzeugt. Des weiteren ist ein Abstandssensor 3 vorge-sehen, der einen Sender und einen Empfänger, insbesondere eine Sende- und eine Empfangsapertur aufweist, die der Übertragung des Pulssignals im freien Raum dienen. Das Pulssignal wird von dem Sender des Abstandssensors 3 mit einer vorgegebenen Strahlungscharakteristik abgestrahlt. Der Abstandssensor 3 kann sich beispielsweise in der vorderen Stoßstange eines Kraftfahr-zeugs befinden, so daß das Signal beispielsweise in eine Richtung vor das Kraftfahrzeug abgestrahlt wird.

Befindet sich vor dem Kraftfahrzeug ein Objekt 4, so wird das abgestrahlte Signal von dem Objekt 4 in Richtung zurück zu dem Abstandssensor 3 reflektiert. Das reflektierte Signal wird dort von dem Empfänger des Abstandssensors 3 empfangen.

In Abhängigkeit von der radialen Entfernung, die das Objekt 4 von dem Abstandssensor 3 und damit beispielsweise von dem Kraftfahrzeug aufweist, benötigt das Pulssignal eine externe Laufzeit, um von dem Sender des Abstandssensors 3 zu dem Objekt 4 und wieder zurück zu dem Empfänger des Abstandssensors 3 zu gelangen. Aufgrund einer auf das Pulssignal einwirkenden Raumdämpfung wird die Amplitude des Pulssignals auf seinem Weg von dem Sender zu dem Objekt 4 und wieder zurück zu dem Empfänger des Abstandssensors 3 gedämpft. Diese Dämpfung der Amplitude erfolgt insbesondere bei einem Pulsradar-Signal im Idealfall quadratisch in Abhängigkeit von der Entfernung des Objekts 4 von dem Abstandssensor 3. Bei anderen Pulssignalen kann jedoch eine andere Dämpfungscharakteristik vorliegen.

Das Pulssignal wird ebenfalls einem Totzeitglied 5 zugeführt, mit dem eine interne Referenztotzeit simuliert wird. Diese Referenztotzeit wird derart variabel erzeugt, daß sie der externen Laufzeit entspricht, die ihrerseits der jeweiligen Entfernung des Objekts 4 von dem Abstandssensor 3 entspricht. Beispielsweise kann die Entfernung zwischen etwa 0,2 m und etwa 5 m betragen, wenn die Schaltung 1 beispielsweise als Einparkhilfe für ein Kraftfahrzeug vorgesehen ist.

Die Totzeit des internen Totzeitglieds 5 wird von einem Sweep-Generator 6 vorgegeben. Dieser erzeugt eine sich nach einer Sweep-Periode wiederholende, von einem Anfangswert auf einen Endwert linear steigende oder linear fallende Sweep-Spannung, die die variable Totzeit des internen Totzeitglieds 5 festlegt. Es ist dabei unerheblich, ob die Sweep-Spannung steigt und/oder fällt und/oder linear verläuft. Wesentlich ist, daß der Anfangswert und der Endwert der Sweep-Spannung den minimalen und maximalen internen Totzeiten und damit Entfernungen des Objekts 4 von dem Abstandssensor 3 bzw. den zugehörigen externen Laufzeiten entsprechen. Damit wird erreicht, daß die zu dem gesamten möglichen Entfernungs- bzw. Beobachtungsbereich zugehörige externe Laufzeit des Totzeitglieds 5 zum Zwecke der vergleichenden kontinuierlichen Laufzeitmessung durchfahren wird.

Ein Durchlauf der Sweep-Spannung von dem Anfangswert zu dem Endwert oder umgekehrt wird als ein Sweep bezeichnet und stellt das kontinuierliche Durchfahren des gesamten Entfernungs- bzw. Beobachtungsbereichs dar. Wie erwähnt, wird dieser Sweep wiederholt durchlaufen, so daß das Durchfahren ebenfalls andauernd wiederholt wird. Auf diese Weise kann beispielsweise die Annäherung des Kraftfahrzeugs an das Objekt 4 durch die wiederholte Erfassung von Abstandsinformationen erkannt werden.

Das von dem Empfänger des Abstandssensors 3 empfangene Signal und das von dem Totzeitglied 5 ausgegebene Signal werden einem Vergleicher 7, insbesondere einem Mischer zugeführt. Entspricht die Totzeit des Totzeitglieds 5 der externen Laufzeit des Pulssignals von dem Sender zu dem Objekt 4 und wieder zurück zu dem Empfänger des Abstandssensors 4, so erzeugt der Vergleicher 7 ein Signal mit einer maximalen Amplitude. Entspricht die Totzeit des Totzeitglieds 5 jedoch nicht der Laufzeit des Pulssignals, so ist die Amplitude des von dem Vergleicher 7 erzeugten Signals sehr klein.

Am Ausgang des Vergleichers 7 sind somit analoge elektrische Signale sig_in vorhanden, wie sie in der Figur 2a dargestellt sind. Die Signal sig_in entstehen dabei bezüglich ihrer Form in Abhängigkeit von der Sweep-Geschwindigkeit und der Charakteristik des Vergleichers 7.

In der Figur 2a sind mehrere Signal sig_in innerhalb eines Sweeps über der Laufzeit bzw. der Totzeit aufgetragen, wobei die angegebenen Werte für die Lauf-/Totzeit nur beispielhaft sind und keine weitere Bedeutung haben. Die Signale sig_in wiederholen sich über der Zeit entsprechend der aufeinanderfolgenden Sweeps, sofern die den Signalen zugeordneten Objekte quasi-stationär bezüglich der radialen Entfernung sind. Dies ergibt sich in der Figur 2a aus den Sweeps 0, 1, 2 und 3. Veränderungen der Lage der Signale sig_in in aufeinander-folgenden Sweeps entsprechen einer Änderung der Entfernung des Objekts 4.

Innerhalb eines der genannten Sweeps stellt die Zeitachse gleichzeitig die Entfernung der Objekte 4 von dem Abstandssensor 3 dar. Weist das Signal sig_in in einem bestimmten Zeitpunkt eine von Null verschiedene Amplitude auf, so bedeutet dies, daß in der zugehörigen Entfernung ein Objekt vorhanden ist. Weist das Signal sig_in in einem bestimmten Zeitpunkt keine das Rauschen wesentlich überschreitende Amplitude auf, so bedeutet dies, daß in der zugehörigen Entfernung kein Objekt vorhanden ist.

Die nachfolgende weitere Erläuterung der Schaltung 1 geht von diesem Signal sig_in als eingangsseitige Pulsgruppe aus. Dabei ist unerheblich, ob das Signal sig_in auf die beschriebene Art und Weise erzeugt worden ist oder nicht. Wesentlich ist, daß das Signal sig_in die beschriebene Bedeutung hat. Es wird ausdrücklich darauf hingewiesen, daß das Signal sig_in auch auf andere Arten erzeugt werden kann bzw. entstehen kann.

Wie bereits erläutert wurde, entspricht die von dem Sweep-Generator 6 erzeugte Sweep-Spannung der Entfernung des Objekts 4 von dem Abstandssensor 3. Ebenfalls entspricht diese Entfernung der Zeitachse des Signals sig_in innerhalb eines Sweeps. Des weiteren ist wie erwähnt bekannt, daß aufgrund der Raumdämpfung das von dem Sender ausgesendete Pulssignal nahezu quadratisch gedämpft wird, bis es von dem Empfänger des Abstandssensors 3 wieder empfangen wird.

Diese Dämpfung wird von einem Schaltungsteil 8 innerhalb der Schaltung 1 kompensiert. Der Schaltungsteil 8 stellt eine Steuerung dar, mit der das Signal sig_in mit einer von der Sweep-Spannung abhängigen Funktion verknüpft wird. Die Abhängigkeit ist dabei quadratisch zur Entfernung. Die Verknüpfung ist eine Multiplikation. Sowohl für die Abhängigkeit, als auch für die Verknüpfung sind auch andere Funktionen als die beschriebenen Funktionen denkbar.

Der Schaltungsteil 8 weist zwei aufeinanderfolgende Multiplizierer 9, 10 auf, denen beiden die von dem Sweep-Generator 6 erzeugt Sweep-Spannung zugeführt ist. Dem ersten Multiplizierer 9 ist das Signal sig_in und dem zweiten Multiplizierer 10 ist das Ausgangssignal des ersten Multiplizierers 9 zugeführt.

Das Signal sig_in wird somit von dem Schaltungsteil 8 quadratisch mit der Sweep-Spannung bewertet. Dies bedeutet, daß bei einer Amplitude des Signals sig_in, die einem Objekt zugeordnet ist, das beispielsweise eine große Entfernung von dem Abstandssensor 3 aufweist, die Sweep-Spannung groß ist und damit die aufgrund der großen Entfernung erfolgte große Dämpfung durch die quadratische Verknüpfung mit der großen Sweep-Spannung ausgeglichen wird. Entsprechend wird bei einer Amplitude des Signals sig_ in, die einem Objekt zugeordnet ist, das eine kleine Entfernung von dem Abstandssensor 3 aufweist, die Sweep-Spannung klein sein, so daß die aufgrund der kleinen Entfernung erfolgte geringe Dämpfung durch die quadratische Verknüpfung mit der kleinen Sweep-Spannung ebenfalls korrekt ausgeglichen wird.

Es wird darauf hingewiesen, daß es in dem vorstehenden Zusammenhang zuerst nicht auf die Größe der Amplitude des Signals sig_in ankommt, sondern auf den Zeitpunkt des Auftretens dieser Amplitude. Diesem Zeitpunkt entspricht, wie erläutert, eine bestimmten Entfernung des Objekts 4 von dem Abstandssensor 3 und damit ebenfalls einem bestimmten Wert der Sweep-Spannung. Mit diesem Wert der Sweep-Spannung wird dann die Amplitude des Signals sig_in quadriert. Erst dies hat eine Veränderung der Amplitude des Signals sig_in zur Folge. Die Veränderung ist dabei der vorhergehenden Dämpfung des Pulssignals auf seinem Weg von dem Sender zu dem Objekt 4 und zurück zu dem Empfänger des Abstandssensors 3 entgegengerichtet.

Insgesamt erfolgt somit in dem Schaltungsteil 8 eine Kompensation der entfernungsabhängigen Dämpfung des Pulssignals durch eine von der Sweep-Spannung abhängige Funktion.

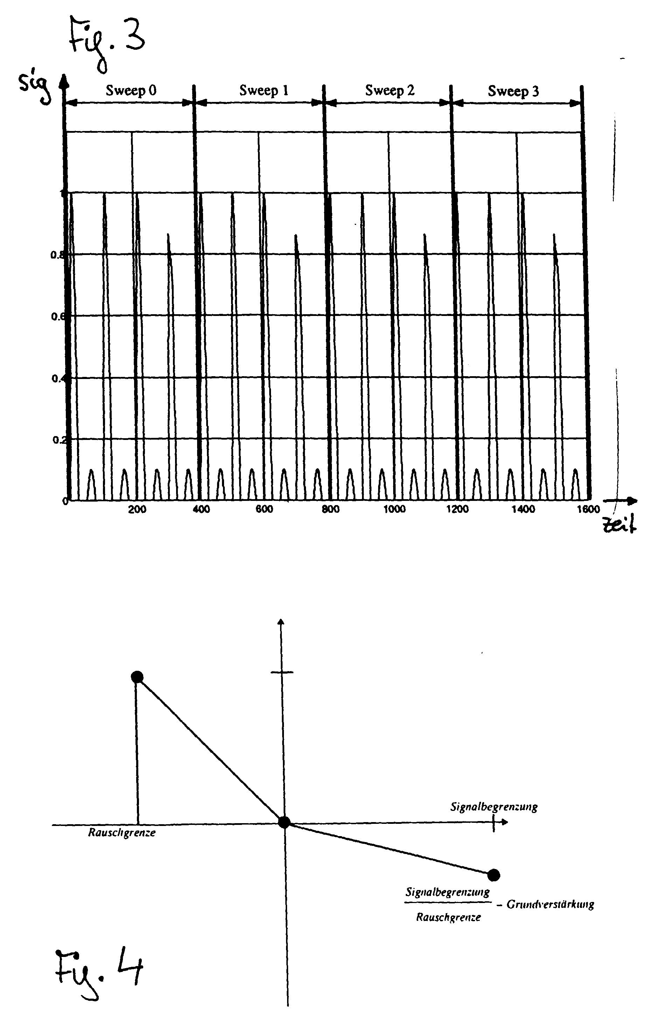

Diese Kompensation hat zur Folge, daß das Signal sig_in, wie es in der Figur 2a dargestellt ist, übergeht in ein kompensiertes Signal am Ausgang des zweiten Multiplizierers 10, wie es in der Figur 3 dargestellt ist. Hierzu ist folgendes zu erläutern.

Das von dem Sender des Abstandssensors 3 ausgesendete Pulssignal wird nicht nur aufgrund der Raumdämpfung vermindert, sondern ist auch abhängig von der Größe, der Reflektions-fähigkeit und sonstigen Parametern des die Reflektion auslösenden Objekts 4. Beispielsweise ist das von dem Empfänger des Abstandssensors 3 empfangene Signal kleiner, wenn es sich um ein kleines Objekt mit einer schlechten Reflektionsfähigkeit handelt, während das empfangene Signal größer ist, wenn das Objekt groß ist und eine gute Reflektionsfähigkeit aufweist.

Im beschriebenen Beispielfall wird davon ausgegangen, daß sich vor dem Kraftfahrzeug insgesamt acht Objekte befinden. Am weitesten entfernt ist ein großes Objekt mit einer guten Reflektionsfähigkeit, dann folgt etwas näher ein kleines Objekt mit einer schlechten Reflektionsfähigkeit, dann folgt wieder etwas näher ein großes Objekt, usw. Große und kleine Objekte wechseln sich also ab, bis am nächsten ein kleines Objekt mit einer schlechten Reflektionsfähigkeit vorhanden ist.

Diese Anordnung der Objekte hat den Verlauf des Signals sig_in gemäß Figur 2a zur Folge. Da die Sweep-Spannung von einem großen Anfangswert zu einem kleinen Endwert verläuft, tritt in der Figur 2a zuerst diejenige Amplitude auf, die zu dem am weitesten entfernten Objekt gehört. Dann wird die Entfernung immer geringer und die achte Amplitude gehört zu dem am nächsten angeordneten Objekt.

Die Größen der Amplituden sind von der Größe des jeweils zugehörigen Objekts abhängig. Das am weitesten entfernte Objekt ist groß, so daß die Amplitude an sich groß sein müßte. Aufgrund der Raumdämpfung ist diese erste Amplitude in der Figur 2a jedoch gedämpft. Das nächst nähere Objekt ist klein, so daß auch die zugehörige Amplitude klein ist. Aufgrund der Raumdämpfung ist diese Amplitude noch weiter gedämpft. Das letzte Objekt ist wie erwähnt ein kleines Objekt. Da dieses Objekt nur eine geringe Entfernung aufweist, ist die Raumdämpfung gering, so daß die zugehörige Amplitude wohl klein ist, aber nicht so klein wie beispielsweise bei der zweiten Amplitude.

Insgesamt ergeben sich daraus die Größen der acht Amplituden des Signals sig_in der Figur 2a als mit abnehmender Entfernung ansteigende Werte, die sich aufgrund der abwechselnd angeordneten großen und kleinen Objekte ebenfalls abwechseln.

In der Figur 3 sind die Größen der Amplituden des dargestellten Ausgangssignals sig des Multiplizierers 10 abwechselnd etwa gleich groß. Dies ergibt sich daraus, daß durch den Schaltungsteil 8 die Raumdämpfung und damit die Entfernung des Objekts 4 von dem Abstandssensor 3 keine Rolle mehr spielt. Die Größe der jeweiligen Objekte hat jedoch weiterhin einen Einfluß auf das vorliegende Signal sig.

Aus der Figur 3 ergibt sich somit, daß nacheinander mit abnehmender Entfernung abwechselnd große und kleine Objekte angeordnet sind. Die unterschiedliche Größe der aufeinanderfolgenden Amplituden ist also eine Folge der Größe der Objekte. Die 7-te Amplitude ist etwas reduziert, da sie durch ein Übersteuern begrenzt wird, das durch die bisher beschriebene Steuerung nicht kompensiert wird.

An dieser Stelle wird darauf hingewiesen, daß das in der Figur 3 dargestellte Signal sig in einer realisierten Schaltung nicht unbedingt vorhanden sein muß. Beispielsweise in der nachfolgend beschriebenen Schaltung der Figur 5 ist dieses Signal sig nicht vorhanden, da in dieser die Stellgröße Anteile einer Steuerung und einer Regelung miteinander verknüpft.

In der Schaltung 1 der Figur 1 ist dem Schaltungsteil 8 ein weiterer Schaltungsteil 11 nachgeordnet. Bei dem Schaltungsteil 11 handelt es sich um eine Regelung. Mit Hilfe des Schaltungsteils 11 wird das in der Figur 3 dargestellte Ausgangssignal sig des Multiplizierers 10 auf ein Normsignal geregelt.

Der Schaltungsteil 11 weist einen Multiplizierer 12 auf, der von dem in der Figur 3 dargestellten Ausgangssignal sig des Multiplizierers 10 beaufschlagt ist. Dem Multiplizierer 12 folgt ein Vergleicher 13, der des weiteren ein Eingangssignal von einem Normsignalerzeuger 14 erhält, der beispielhaft ein Normsignal mit der Konstante "0,5" vorgibt. Dem Vergleicher 13 ist eine Kennlinie 15 und ein Dämpfungsglied 16 nachgeschaltet. Das Ausgangssignal des Dämpfungsglieds 16 beaufschlagt einen Addierer 17, dem ein Totzeitglied 18 nachgeschaltet ist. Das Ausgangssignal des Totzeitglieds 18 ist auf den Addierer 17 rückgekoppelt sowie einem weiteren Addierer 19 zugeführt. Der Addierer 19 ist des weiteren von einem Anfangswert beaufschlagt ist, der beispielhaft die Konstante "1,0" sein kann, und der von einem Anfangswerterzeuger 20 erzeugt wird. Das Ausgangssignal des Addierers 19 ist als Eingangssignal an den Multiplizierer 12 angeschlossen.

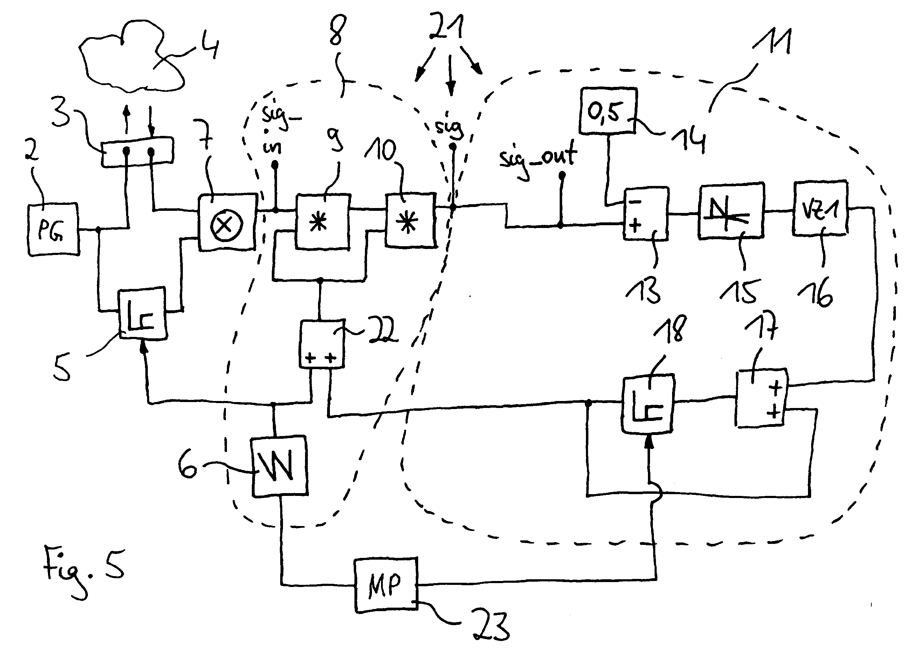

Ein Beispiel für die Kennlinie 15 ist in der Figur 4 dargestellt. Das Eingangssignal der Kennlinie 15 ist auf der Abszisse und das Ausgangssignal auf der Ordinate aufgetragen. Das Eingangssignal der Kennlinie 15 stellt etwa die Abweichung des in der Figur 3 dargestellten Ausgangssignals des Multiplizierers 10 von dem Normsignal "0,5" dar.

Jedes Eingangssignal, dessen Abweichung von dem Normsignal ungleich Null ist, erfordert einen Regeleingriff. Die Kennlinie 15 muß daher durch den Nullpunkt verlaufen. Für diesen Fall ist die Regelabweichung Null und damit keine Korrektur erforderlich.

Das auf der negativen Seite der Kennlinie 15 vorhandene minimale Eingangssignal wird durch eine Rauschgrenze festgelegt, unter der ein Eingangssignal nicht mehr berücksichtigt wird. In diesem Fall ist das Signal der Figur 3 derart klein, daß in der zugehörigen Entfernung kein Objekt angenommen wird.

Das auf der positiven Seite der Kennlinie 15 vorhandene maximale Eingangssignal wird durch eine Signalbegrenzung festgelegt, mit der das Signal sig aus schaltungstechnischen Gründen begrenzt ist, weil beispielsweise der Eingangsbereich der Multiplizierer überschritten wird.

In der Figur 4 ist die Kennlinie 15 linear dargestellt. Es ist aber auch möglich, daß die Kennlinie 15 aus Kurvenstücken zusammengesetzt ist. Ebenfalls ist es möglich, daß die Kennlinie einen von dem dargestellten Verlauf grundlegend abweichenden Verlauf aufweist.

Bei dem Dämpfungsglied 16 kann es sich beispielsweise um ein sogenanntes VZ1-Glied handeln, das dazu vorgesehen ist, starke Überschwinger des Ausgangssignals der Kennlinie 15 zu glätten, bzw. die Regelstruktur so weit zu dämpfen, dass die Signalform der zu regelnden Größe nicht zu stark verletzt wird.

Das Totzeitglied 18 gibt sein Eingangssignal nach einer vorgebbaren Totzeit als Ausgangssignal weiter. Die Totzeit wird entsprechend der Figur 1 von einem Mikroprozessor 23 beein-flußt, der auch den Sweep-Generator 6 ansteuert. Die Totzeit entspricht dabei exakt der Sweep-Periode eines Sweeps, also derjenigen Zeitdauer, die ein Sweep für einen Durchlauf von seinem Anfangswert zu seinem Endwert benötigt.

Weist ein Puls des in der Figur 3 dargestellte Ausgangssignal sig-out des Multiplizierers 12 eine Abweichung von dem Normsignal auf, so wird dies von dem Vergleicher 13 erkannt. Die Abweichung wird durch die Kennlinie 15 bewertet und es wird eine positive oder negative Korrekturgröße durch die Kennlinie 15 erzeugt. Diese Korrekturgröße wird von dem Dämpfungsglied 16 geglättet. Dann wird die Korrekturgröße von dem Totzeitglied 18 um einen Sweep verzögert, so daß die Korrekturgröße erst im nächsten Sweep am quasistationären Puls zur Wirkung kommt. Die Wirkung der Korrkturgröße auf das Signal der Figur 3 wird durch den Multiplizierer 12 erreicht.

Mit Hilfe der Rückkopplung des Ausgangssignals des Totzeitglieds 18 auf den Addierer 17 wird erreicht, daß eine in einem Sweep vorgenommene Korrektur auch noch im nächsten Sweep berücksichtigt wird. Somit ist die zu ermittelnde Folgestellgröße nur das Inkrement auf die bisherige Korrekturgröße.

Nach dem Einschalten weist das Totzeitglied 18 den Ausgangswert "0" auf. Damit der Schaltungsteil 11 überhaupt zu eier Regelung angeregt wird, ist deshalb der Anfangswerterzeuger 20 vorgesehen, mit dem nach dem Einschalten der Wert "1" vorgegeben und damit eine Regelung begonnen wird.

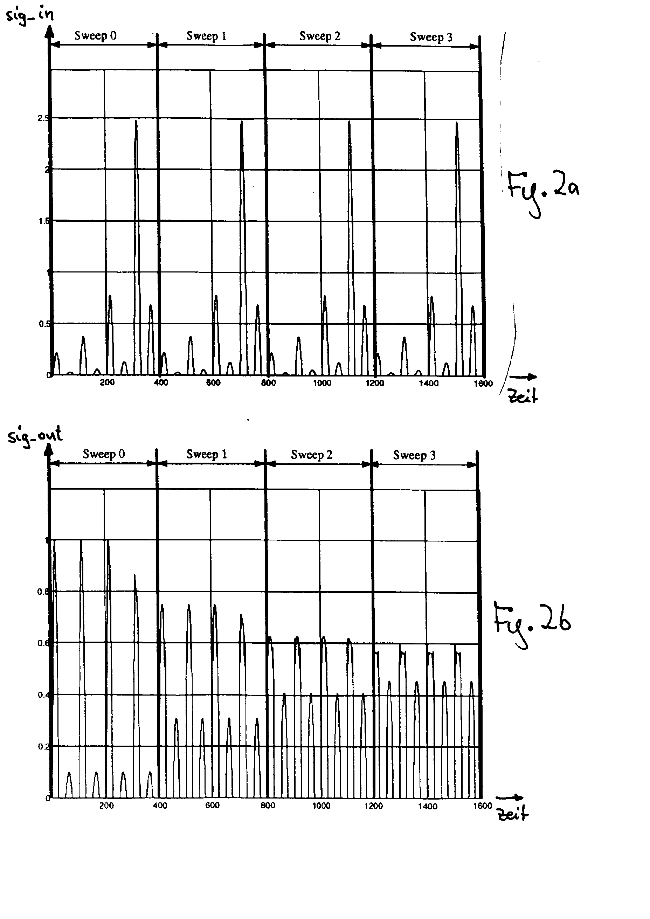

Nach dem Durchlauf durch mehrere Sweeps ergibt sich ein Signal sig_out am Ausgang des Multiplizierers 12, wie dies in der Figur 2b dargestellt ist. Ersichtlich nähern sich die Maximalwerte der Amplitude nach einer gewissen Einschwingzeit dem Wert "0,5" an, also dem erwünschten Normwert.

Damit ist durch den Schaltungsteil 11 der Einfluß der Größe und der Reflektionsfähigkeit und dergleichen der einzelnen Objekte kompensiert. Für alle Objekte 4 ergeben sich etwa gleich große Amplituden, die damit sicher und genau weiterverarbeitet werden können.

Insgesamt ist mit Hilfe der Schaltungsteile 8 und 11 eine Normierung des analogen elektrischen Signals sig_in vorgenommen worden. Das entstehende Signal sig_out am Ausgang des Multi-plizierers 12 kann nunmehr beispielsweise einem Analog/Digital-Wandler zur weiteren digitalen Signalverarbeitung zugeführt werden. Der Eingangsbereich dieses Analog/Digital-Wandlers kann dabei optimal ausgenutzt werden, da das Signal sig_out wie erwähnt auf einen Normwert normiert ist. Daraus ergibt sich ein geringes Quantisierungsrauschen bei der Wandlung für kleine Pulse, die durch die Regelung bzw. Steuerung auf die Normgröße verstärkt wurden. Zu große Pulse werden auf die Normgröße gedämpft, um ein Übersteuern zu vermeiden.

In der Figur 5 ist eine Schaltung 21 dargestellt, die weitgehend der Schaltung 1 der Figur 1 entspricht. Aus diesem Grund sind übereinstimmenda Bauteile auch gleich bezeichnet.

Der Unterschied zwischen der Schaltung 21 der Figur 5 und der Schaltung 1 der Figur 1 besteht im wesentlichen darin, daß bei der Schaltung 1 die Steuerung und die Regelung vollständig unabhängig voneinander sind, während in der Schaltung 21 die Steuerung und die Regelung einen gemeinsamen Stelleingriff aufweisen und damit einander überlagern. Bei der Schaltung 21 erfolgt die Kompensation der Raumdämpfung durch die Steuerung zeitgleich mit dem Stelleingriff der Regelung, so daß sich der resultierende Stelleingriff aus beiden Komponenten zeitgleich zusammensetzt.

In der Schaltung 21 der Figur 5 ist der Multiplizierer 12 der Figur 1 nicht vorhanden. Zu diesem Zweck ist das Ausgangssignal des Totzeitglieds 18 über einen Addierer 22 mit dem Ausgangs-signal des Sweep-Generators 6 verknüpft und dann den beiden Multiplizieren 9, 10 zugeführt.

Der Addierer 19 und der Anfangswerterzeuger 20 der Schaltung 1 der Figur 1 sind ebenfalls entfallen. Der Anfangswert wird in der Schaltung 21 der Figur 5 von dem Sweep-Generator 6 vorgegeben.

Das Ausgangssignal sig_out des Multiplizierers 10 der Schaltung 21 der Figur 5 entspricht im wesentlichen dem Signal sig_out der Figur 2b und damit dem Signal sig_out der Schaltung 1 der Figur 1.

### Bezugszeichenliste

- 1: Schaltung
- 2: Pulsgenerator
- 3: Abstandssensor
- 4: Objekt
- 5: Totzeitglied
- 6: Sweep-Generator
- 7: Vergleicher
- 8: Schaltungsteil (Steuerung)
- 9: Multiplizierer
- 10: Multiplizierer
- 11: Schaltungsteil (Regelung)
- 12: Multiplizierer
- 13: Vergleicher
- 14: Normsignalerzeuger
- 15: Kennlinie
- 16: Dämpfungsglied
- 17: Addierer
- 18: Totzeitglied
- 19: Addierer
- 20: Anfangswerterzeuger
- 21: Schaltung
- 22: Addierer
- 23: Mikroprozessor

## Patentansprüche

1. Verfahren zur Verarbeitung eines analogen elektrischen Signals (sig), das von einem Objekt (4) reflektiert und von einem Empfänger empfangen wird, wobei die Amplitude des empfangenen Signals abhängig ist von der Entfernung des Objekts (4) von dem Empfänger, dadurch **gekennzeichnet,** daß das Signal (sig) an ein Normsignal angepaßt wird.

2. Verfahren nach Anspruch 1, dadurch **gekennzeichnet,** daß das Signal (sig) mit dem Normsignal verglichen wird.

3. Verfahren nach Anspruch 2, dadurch **gekennzeichnet,** daß das Signal (sig) von einer von dem Vergleichsergebnis abhängigen Korrekturgröße beeinflußt wird.

4. Verfahren nach einem der Ansprüche 2 oder 3, dadurch **gekennzeichnet,** daß das Vergleichsergebnis mit einer Kennlinie (15) verknüpft wird.

5. Verfahren nach einem der Ansprüche 2 bis 4, dadurch **gekennzeichnet,** daß das Vergleichsergebnis mit einer Trägheit (16) beaufschlagt wird.

6. Verfahren nach einem der Ansprüche 2 bis 5, dadurch **gekennzeichnet,** daß das Vergleichsergebnis mit einer Totzeit (18) verzögert wird.

7. Verfahren nach einem der vorstehenden Ansprüche, dadurch **gekennzeichnet,** daß das Signal (sig_in) mit einer Funktion verknüpft wird, mit der die Abhängigkeit von der Entfernung kompensiert wird.

8. Verfahren nach Anspruch 7, dadurch **gekennzeichnet,** daß die Funktion von einem Anfangswert auf einen Endwert linear erhöht oder erniedrigt wird.

9. Verfahren nach Anspruch 8, dadurch **gekennzeichnet,** dass der Anfangswert und der Endwert der maximalen und der minimalen zu detektierenden Entfernung entsprechen.

10. Verfahren nach einem der Ansprüche 7 bis 9, dadurch **gekennzeichnet,** daß die Funktion mit einer Sweep-Periode fortlaufend wiederholt wird.

11. Verfahren nach einem der Ansprüche 7 bis 10, dadurch **gekennzeichnet,** daß das Signal (sig_in) mit der Funktion quadratisch verknüpft wird.

12. Verfahren nach Anspruch 6 und Anspruch 10, dadurch **gekennzeichnet,** daß die Totzeit der Sweep-Periode entspricht.

13. Elektrische Schaltung (1) zur Verarbeitung eines analogen elektrischen Signals (sig), mit einem Empfänger zum Empfangen des von einem Objekt (4) reflektierten Signals, wobei die Amplitude des empfangenen Signals abhängig ist von der Entfernung des Objekts von dem Empfänger, dadurch **gekennzeichnet,** daß Mittel zur Anpassung des Signals (sig) an ein Normsignal vorgesehen sind.

14. Schaltung nach Anspruch 13, dadurch **gekennzeichnet,** daß Mittel (8) zur Verknüpfung des Signals (sig_in) mit einer Funktion vorgesehen sind, mit der die Abhängigkeit von der Entfernung kompensierbar ist.
